# EUROPEAN PATENT APPLICATION

(11) **EP 1 360 887 A1**
(43) Date of publication of application: **12.11.2003**
(21) Application number: 02380095.6
(22) Date of filing: 10.05.2002
(51) Int. Cl.: A01D 34/00

(54) **Agricultural implement for clearing vegetation**

(71) Applicant: Umbria del Villar, S.L., Puerto Llano, 13500 Ciudad Real (ES)
(72) Inventor: Gimeno Infante, Maria Dolores del Rocio, 28008 Madrid (ES)
(74) Representative: Davila Baz, Angel

(57) **Abstract**

Agricultural implement for clearing vegetation which comprises a rotating support (15) that has a central part (18) and a peripheral part (14) joined to said central part (18), a plurality of flexible filiform cutting elements (19) fastened to said rotating support (15), so that they extend from the peripheral part (14) of said rotating support (15), movement transmission means (8) between a motor device (30) and the rotating support (15) arranged so that the motor device (30) can produce the rotation of the rotating support (15), the transmission means (8) comprising a second rotating transmission shaft (12) connected to the central part (18) of the rotating support (15) and support means (2) of the rotating support (15) said plurality of cutting elements (19) comprising a number N of cutting elements, where N >_ 3.

## Description

### Object of the invention

The present invention relates to an agricultural implement for clearing, for example, weeds, scrub and undergrowth, for use in fields for the cultivation of trees like for example olive trees.

### Background of the invention

A great many agricultural implements are known for use in the clearing of weeds for employment with different types of crops.

The construction of the aforementioned agricultural implements is very varied, there being a great quantity of different types of clearing devices coupled to the power take-off of the tractor and which are employed as one more agricultural implement.

In the document EP-A-0356358 an improved chassis mowing machine is described in which an agricultural cutting machine is connected to the chassis of a tractor with a mechanism for the deployment or retraction of said agricultural implement which moves it from a position parallel to the ground to an almost vertical position. In this document the agricultural cutting machine comprises, on its end nearest the chassis, a revolving drum that is traversed by a drive shaft that moves some cutting elements.

In the document ES-A-2006144 a self-propelled machine is described for mowing and/or clearing jobs, particularly on at the sides of roads, which consists basically of a propelling equipment to which a cutting mechanism or actuator equipment is coupled which facilitates the operation of a working equipment arranged coaxially with the actuator equipment and collaterally therewith and with the tractor unit; so that, it makes working possible perpendicularly to the direction of travel and particularly below metallic safety barriers or dual-wave metallic bands situated at the sides of roads and motorways. The working equipment comprises a cutting system made up of a chain, cyclically displaceable in an elongated frame and which carries some cutting blades in the form of sweeping pans. The actuator equipment and the working equipment are mounted in a hinged arrangement so that the latter swivels.

In the document ES-A-1048598U a clearing device is described adaptable to a tractor, which has an upper central arm on which a rotating vertical axle is mounted and on the head of which some blades are mounted, each blade having a flat metallic portion of appropriate thickness and the clearing device having a length of chain, one of the end links of which is welded to the internal rim of the blade while the other end link is coupled to the head.

The document ES-A-1045650U describes an improved multi-purpose clearing unit characterised in that it is constituted on the basis of a cylinder from which a set of chains extend axially, provided with counterweights located in the area opposite to the point of connection with the cylinder, the chains being joined to the cylinder by means of disks traversed by axles provided with tubes, the cylinder being fitted a protective casing and with a U-shaped piece for its connection to the tractor.

All the devices described are normally used to carry out ground clearing jobs, that is to say to remove parasitic plants, weeds and scrub, which absorb a great quantity of resources from the land that should be for the benefit of the crop.

Most of the well-known devices incorporate elements that due to their construction and to the type of medium where they usually work, in which very hard objects are usually found like for example dry tree trunks or stones, suffer serious wear from friction and impact that signify the frequent occurrence of breakdowns and time lost in repair and particularly significant expense in maintaining these devices.

Furthermore, due to the large size of the mentioned devices, their handling and transport are sometimes complicated, even in the devices that offer the possibility of being retracted manually or automatically as is described in one of the documents mentioned above.

Moreover the cutting elements themselves of these devices are usually rigid and very hard, being usually of metallic materials or the like, due to which circumstance when they are used in the clearing of cultivated fields, for example of olive trees, they damage the bark of the trees, having therefore a certain limitation through not being able to clear correctly the vegetation that is in the vicinity of the trunk, recourse being had to the use of auxiliary machinery, like for example brushcutters or the like.

### Description of the invention

The present invention relates to an agricultural implement for clearing vegetation according to claim 1; preferred embodiments of the agricultural implement for clearing vegetation are defined in the individual claims.

The agricultural implement for clearing vegetation object of the present invention comprises:
- a rotating support which has a central part and a peripheral part joined to said central part;
- a plurality of flexible filiform cutting elements fixed to this rotating support, so that they extend from the peripheral part of said rotating support;
- movement transmission means between a motor device and the rotating support arranged so that the motor device can make the rotating support rotate, the transmitting means comprising a rotating axle connected to the central part of the rotating support;
- support means of the rotating support;

The agricultural implement for clearing vegetation object of the present invention is characterised in that the plurality of cutting elements comprises a number N of cutting elements, where N ≥ 3.

Each of the cutting elements, in its turning movement, covers an effective cutting surface in the form of a sector of a circle, the effective cutting surface of each cutting element being smaller in angular amplitude the greater the number of cutting elements.

This particular arrangement of the cutting elements results in the wear of each cutting element being diminished in the measure that the number of cutting elements is increased, which supposes a smaller percentage of breakdowns and consequently a decrease in the maintenance cost of the agricultural implement.

In a first preferred embodiment of the invention, the rotating support of the agricultural implement for clearing vegetation is joined to the peripheral part by means of radial connecting elements.

The peripheral part of the rotating support comprises an element substantially ring-shaped, which allows the radial and equidistant arrangement of the cutting elements.

The number of cutting elements distributed over the rotating support is between 4 and 10 elements, preferably it is between 6 and 8 elements.

Also the agricultural implement for clearing comprises connection means, of the transmission means, to the power take-off of the tractor, and connection means, of the support, to the chassis of the tractor.

The movement transmission means consists of a first transmission shaft, a multiplier box, a cardan joint and a second transmission shaft.

The first transmission shaft rests on the support means that also secure the rotating support, said first transmission shaft is connected to the power take-off of the tractor. Connected to the aforementioned first transmission shaft and at the opposite end is mounted the multiplier box that together with the cardan joint serve to transform the circular movement of the first transmission shaft that comes from the power take-off of the tractor, into a circular movement of the second transmission shaft.

By means of the multiplier box it is possible to vary the magnitude of the angular velocity of rotation that comes from the power take-off of the tractor. In this particular case the angular velocity is increased to achieve a suitable angular running speed to facilitate effective cutting of the vegetation.

Connected to the support means is provided a marker element that indicates the position of the rotating support with regard to the nearby trees when the clearing operation is taking place.

In a second embodiment of the invention, both the support means and the transmission means are extendable allowing the displacement of the rotating support with respect to the chassis of the tractor, in a direction approximately parallel to the plane of the ground.

This characteristic of the second preferred embodiment allows the adjustment of the rotating support with respect to the tractor, so that the cutting elements can be deployed or retracted without touching the wheels of the tractor, which is highly useful since, for example, if these elements are deployed, a greater effective cutting surface is achieved, it being possible to separate the tractor more from the trees stops and thereby not damage either the trunk with the cutting elements, or the lower branches of the tree with the tractor cabin.

In a third preferred embodiment of the agricultural implement for clearing, the motor device that drives the agricultural implement for clearing vegetation is firmly joined to the support means forming part of the actual agricultural implement for clearing vegetation.

### Description of the drawings

A clearer understanding of the characteristics of the present invention is possible with the following description, in which an example of embodiment is shown, accompanied as an integral part of said description, with a set of drawings wherein by way of illustration and not restrictively, the following has been represented:
Figure 1 shows a view in perspective of the agricultural implement for clearing vegetation connected to a tractor.
Figure 2 shows a partial view in perspective of the agricultural implement for clearing vegetation.
Figure 3 shows a schematic side view of the agricultural implement for clearing vegetation connected to the tractor according to a second embodiment of the invention.
Figure 4 shows a plan view of the rotating support in accordance with the invention.
Figure 5 shows a schematic rear view of the agricultural implement for clearing vegetation together with the tractor, when they are operating in clearing vegetation.
Figure 6 shows a schematic view of an agricultural implement for clearing vegetation according to a third embodiment of the invention.

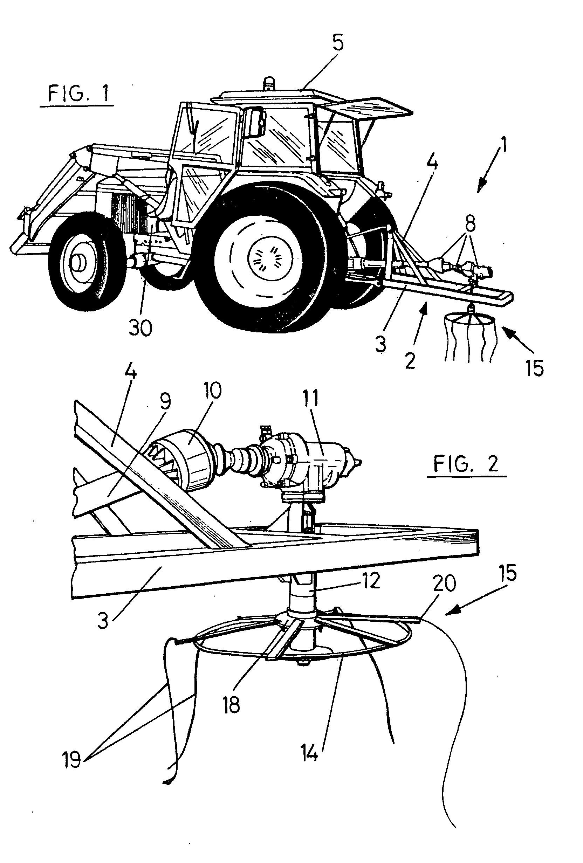

Figure 1 shows the agricultural implement for clearing vegetation 1 object of the present invention which consists of a support means 2 that comprises a frame 3 constituted from a rigid structure, which adopts a disposition parallel to the ground when the clearing operation is being carried out. The rigid structure mentioned has an approximately rectangular form and is constructed from hollow bars of approximately square section.

The support means 2 is connected to the chassis 31 of the tractor 5 with connection means 4 mounted on the support means 2.

To carry out the connection of the support means 2 of the agricultural implement for clearing vegetation 1 to the tractor 5 a connection means 4 of the support means 2 is used that consist in a plurality of bars of sufficient section to support the weight of the agricultural implement for clearing vegetation 1 and which in turn is connected to the chassis 31 of the tractor 5, this connection being fitted with means of tightening and fastening 7.

On the support means 2 a means for transmitting movement 8 is mounted, which transmits the movement from a motor device 30 to the rotating support 15, which consists of a first transmission shaft 9, a multiplier box 10, a cardan joint 11 and a second transmission shaft 12. The transmission of the movement is achieved through some connection means 6 mounted on the transmission means 9 to connect the first transmission shaft 9 with the power take-off of the tractor 13.

The first transmission shaft 9 rests on the support means 2 and is connected to the power take-off of the tractor 13. Connected to the aforementioned first transmission shaft 9 is provided the multiplier box 10 that together with the cardan joint 11 serve to transform the circular movement of the first transmission shaft 9 that rotates about a horizontal axis, into a circular movement of the second transmission shaft 12 that rotates about a vertical axis.

By means of the multiplier box 10 it is possible to vary the magnitude of the angular velocity of rotation provided by the power take-off of the tractor 13. In this particular case the angular velocity is increased to achieve a suitable angular running speed to facilitate effective cutting of the vegetation.

Connected to the second transmission shaft 12 which is in a vertical position, and propelled thereby, a rotating support 15 is mounted that has a central part 18 in the form of a circular crown and a peripheral part 14 that consists of a substantially ring-shaped element, located concentrically with the aforementioned central part 18 of the rotating support, the central part 18 and the peripheral part 14 are connected by means of some radial connecting elements 16 consisting of a plurality of bars 17 of reduced section, arranged radially with respect to the second transmission shaft and equidistant from each other.

Along the peripheral part 14 of the rotating support 15 are secured the cutting elements 19, by one of their ends 20 in points coincident with the ends of the radial connecting elements 16 that are on the peripheral part 14 of the rotating support 15.

The cutting elements 13 are filiform, flexible and of a material with high mechanical breaking strength.

The cutting elements 19 are preferably threads of a synthetic nature and more specifically of a plastic material than combines the required characteristics of flexibility and mechanical breaking strength.

The number of cutting elements 19 arranged on the rotating support 15 is always greater than 3, being between 4 and not being greater than 10, being preferably between 6 and 8.

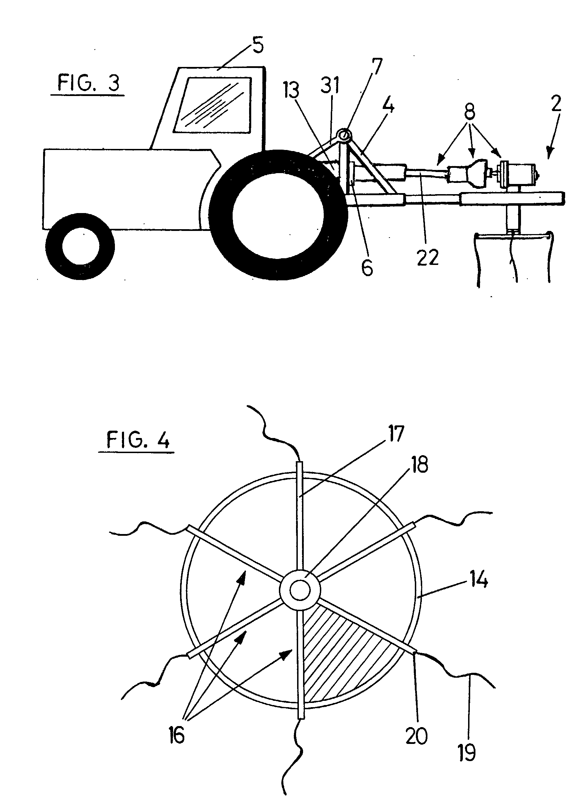

Each of the cutting elements 19, in its turning movement, covers an effective cutting surface area in the form of a sector of a circle 20, represented in figure 4 by means of a hatched area.

The effective cutting surface area of each cutting element 19 is of smaller angular amplitude the greater the number of cutting elements.

So that the driver of the tractor 5 can monitor the relative position of the rotating support 15 and of the cutting elements 19 with respect to the trunk 24 of the tree 25, and thereby not damage the aforementioned trunk 24, a marker element 28 is fixed to the frame 3, said marker element 28 consisting of a luminous type warning connected to the frame 3 by means of an arm 29 secured to one of the sides of said frame 3 and perpendicular thereto in the same plane.

Due to this marker element 28, the driver can observe the position thereof from the cabin 26 when the cutting operation is proceeding and thereby control the movement of the tractor 5 and therefore also control the movement of the rotating support 15 and of the cutting elements 19, in order not to damage either the trunks 24 or the branches 27 of the trees 25 nearby.

In a second embodiment of the invention, both the support means 2 and the transmission means 8 are extendable allowing the displacement of the rotating support 15 with respect to the chassis of the tractor 31, in a direction approximately parallel to the plane of the ground.

A telescopic coupling 22 is provided in the first transmission shaft in order to make the transmission means extendable.

The distancing of the rotating support 15 facilitates the increase in length of the cutting elements 19 without these touching the wheels 23 of the tractor 5 when the rotating support 15 is in operation and the cutting elements 19 are completely deployed, thereby increasing the effective cutting surface area.

Thus it is possible to avoid the cutting elements 19 and the wheels 23 being damaged by each other due to impact between the two.

With the increase of the effective cutting surface area, it is possible that the tractor 5 be located farther away from the trunk 24 during the cutting operation and therefore the cabin 26 of the tractor 5 does not touch the lower branches 27, avoiding harm to the tree that could diminish the productivity thereof.

In a third preferred embodiment of the agricultural implement for clearing vegetation, the motor device 30' that drives the agricultural implement for clearing vegetation 1' is firmly joined to the support means 2' forming part the of actual agricultural implement for clearing vegetation 1.

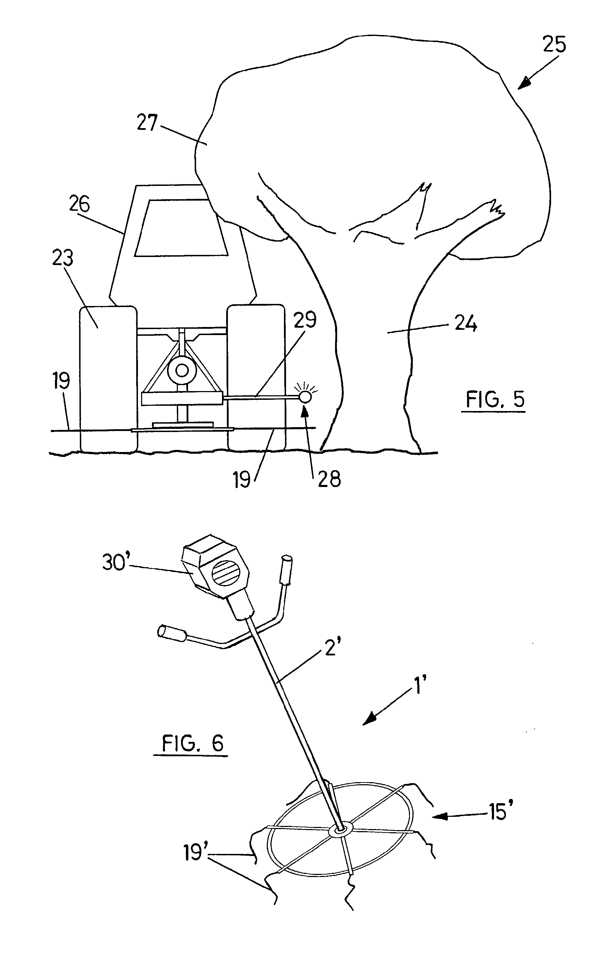

Figure 6 shows how the motor device 30' is firmly joined to the support means 2' that in this case adopts a tubular form in the interior of which is mounted the transmission means 8', the rotating support 15' has a similar configuration to that described for the other embodiments of the invention, as well as the cutting elements 19'.

## Claims

1. Agricultural implement for clearing vegetation which comprises:
- a rotating support (15) that has a central part (18) and a peripheral part (14) joined to said central part (18);
- a plurality of flexible filiform cutting elements (19) fastened to said rotating support (15), so that they extend from the peripheral part (14) of said rotating support (15);
- movement transmission means (8) between a motor device (30) and the rotating support (15) arranged so that the motor device (30) can produce the rotation of the rotating support (15), the transmission means (8) comprising a second rotating transmission shaft (12) connected to the central part (18) of the rotating support (15);
- support means (2) of the rotating support (15);
**characterised in that** said plurality of cutting elements (19) comprise a number N of cutting elements, where N ≥ 3.

2. Agricultural implement according to claim 1, **characterised in that** the central part (18) of the rotating support (15) is joined to the peripheral part (14) by means of radial connecting elements (16).

3. Agricultural implement according to any one of claims 1 and 2, **characterised in that** the peripheral part (14) of the rotating support (15) comprises an element in a substantially ring-shaped form.

4. Agricultural implement according to any one of the previous claims, **characterised in that** 4 ≤ N < 10.

5. Agricultural implement according to claim 4, **characterised in that** 6 ≤ N ≤ 8.

6. Agricultural implement according to any one of the previous claims, **characterised in that** the support means (2) and the transmission means (8) are extendable, the first transmission shaft (9) having a telescopic coupling (22).

7. Agricultural implement according to any one of the previous claims, **characterised in that** it comprises connection means (6), of the transmission means (8), to the power take-off of the tractor, and connection means (4), of the support means (2), to the chassis of the tractor (31).

8. Agricultural implement according to any one of the previous claims, **characterised in that** the movement transmission means (8) consist of a first transmission shaft (9), a multiplier box (10), a cardan joint (11) and a second transmission shaft (12).

9. Agricultural implement according to any one of the previous claims, **characterised in that** connected to the support means (2) a marker element (28) is mounted that indicates the position of the rotating support (15) with respect to the trees (25) nearby when the clearing operation is taking place.

10. Agricultural implement according to any one of claims 1 to 6, **characterised in that** the motor device (30) that drives the agricultural implement for clearing vegetation (1) is firmly joined to the support means (2) forming part of said agricultural implement for clearing vegetation (1).
